# EUROPEAN PATENT APPLICATION

(11) **EP 1 803 636 A2**
(43) Date of publication of application: **04.07.2007**
(21) Application number: 06026329.0
(22) Date of filing: 19.12.2006
(51) Int. Cl.: B62K 19/18

(54) **Straddle-type vehicle and assembly method therefor**

(30) Priority: 30.12.2005 CN 200510048823
(71) Applicant: YAMAHA HATSUDOKI KABUSHIKI KAISHA, Iwata-shi, Shizuoka-ken 438-8501 (JP)
(72) Inventor: Yu-wei, Chen, Chunli Taiwan (CN)
(74) Representative: Grünecker, Kinkeldey, Stockmair & Schwanhäusser Anwaltssozietät

(57) **Abstract**

The present invention relates to a straddle-type vehicle, in particular two-wheeled vehicle such as motorcycle, having a frame structure for installing means of the vehicle, said frame structure being divided into a head tube frame (123) and a main frame (1), which are joined via a joint portion to form a frame assembly.

## Description

The present invention relates to a straddle-type vehicle and to an assembly method for such a vehicle. In particular, it refers to a frame structure used in a motorcycle. More particularly, the present invention relates to a frame structure used in a scooter.

All sorts of vehicles have a frame for supporting the body and loading various parts required to be assembled thereon. Therefore, the design of the frame must follow the principle of being portable and firm, so as to not only bear the weight of each part loaded thereon without causing the vehicle to be over-weighted, but also ensure the safety of the vehicle.

The motorcycle is no exception, and it also has a frame for loading required means such as the steering system, suspension system (damping system), front and rear wheels, brake system, drive system, and meters, to be assembled into an integrated motorcycle.

As for a conventional frame of a motorcycle, generally the frame is divided into a plurality of tubes according to the shape of the body and the tubes are cast by iron or steel. Then, the means are joined through sheet metal by welding, thus forming a frame assembly.

The formed frame assembly is then sent to a product line, and a series of assembly operations are carried out to install each means of the motorcycle on the frame assembly, thus obtaining a motorcycle product.

However, in the conventional art, as each frame tube is manufactured by iron or steel, and the iron or steel is relatively heavy, it is difficult to reduce the whole weight of the motorcycle. Meanwhile, the configuration of joining the frame tubes cast respectively by welding has problems of being large in the number of the prepared means, high in cost and long in the working hours of the welding process, and low in strength at the welding portion for a long term.

Moreover, in the conventional art, as the whole finished frame assembly is sent to the product line to go through a series of assembly operations, each working procedure must be carried out step be step according to the process, and the operations independent of each other cannot be performed simultaneously. Therefore, for the assembly operations of the product line, it is difficult to significantly reduce the time required by the whole assembly operation flow.

As for various problems existing in the above conventional frame structure of a motorcycle, no effective solution has been proposed in the field for a long time. Therefore, in view of the above problems, the inventor of the present invention thought and did research to provide an original solution. That is, the objective of the present invention is to provide a straddle-type vehicle (in particular a frame structure of a motorcycle), which can enhance the assembly efficiency, and has the advantages of being high in strength, high in rigidity and light in weight.

This objective is solved by a straddle-type vehicle, in particular two-wheeled vehicle such as motorcycle, having a frame structure for installing means of the vehicle, said frame structure being divided into a head tube frame and a main frame, which are joined via a joint portion to form a frame assembly.

Preferably, the head tube frame comprises a head tube and a joint member, and the main frame comprises a supporting portion, and wherein the joint member of the head tube frame is joined to the supporting portion of the main frame and is supported by same to form the frame assembly.

Further, preferably the joint portion is arranged in the area of the down tube of the frame assembly.

Yet further, preferably the head tube frame and the main frame are respectively a welding member of steel tube and sheet metal or an integrated casting.

Still further, preferably the integrated casting is cast by any one of light metals, engineering plastics and composite materials.

For the method aspect, this objective is solved by an assembly method for a straddle-type vehicle, in particular two-wheeled vehicle such as a motorcycle, said vehicle being provided with a frame assembly combined of a head tube frame and a main frame, wherein initially the assembly operations required to install means of the vehicle to the frame assembly are carried out for the head tube frame and the main frame independently from each other, and wherein, subsequently, the head tube frame and the main frame are joined together to form the frame assembly.

In the following, the present invention is explained in greater detail with respect to several embodiments thereof in conjunction with the accompanying drawings, wherein:
- Fig. 1: is a schematic view of the arrangement of the frame of a motorcycle having the frame structure of the present embodiment,
- Fig. 2(a): is a stereogram of an embodiment of the welding-type head tube frame in the frame structure,
- Fig. 2(b): is a stereogram of an embodiment of the integrated casting-type head tube frame in the frame structure of a motorcycle,
- Fig. 3(a): is a stereogram of another embodiment of a welding-type head tube frame in the frame structure of a motorcycle,
- Fig. 3(b): is a stereogram of another embodiment of an integrated casting-type head tube frame in the frame structure of a motorcycle,
- Fig. 4: is a stereogram of a further embodiment of the welding-type main frame in the frame structure of a motorcycle,
- Fig. 5(a): is a stereogram of a further embodiment of the integrated casting-type main frame in the frame structure of a motorcycle,
- Fig. 5(b): is a sectional view along Line A-A,
- Fig. 6: is a schematic view of the joining state of an assembled frame structure of a motorcycle according to the present embodiments with other means of the motorcycle omitted, and
- Fig. 7: is a schematic view of the modularized assembly of the frame structure of a motorcycle according to the present embodiments.

Embodiments are illustrated in detail below with reference to the drawings.

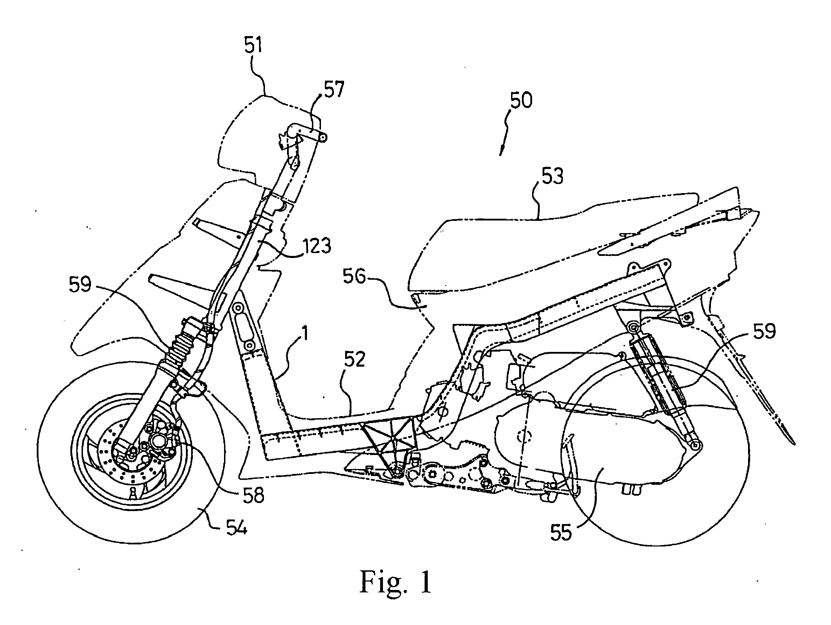

Fig. 1 is a schematic view of the arrangement of the frame of a motorcycle 50 having the frame structure of the present embodiments. In Fig. 1, though the frame structure of a motorcycle of the present embodiments is applied to a motorcycle, the present teaching is not limited to be used in a motorcycle and can also be used in other types of motorcycles, such as a gearshift motorcycle and power vehicle, wherein the power vehicle is, for example, an all-terrain vehicle (ATV) or a snow motor vehicle.

As shown in Fig. 1, the motorcycle 50 having a frame 1 of the motorcycle of the present embodiment comprises means such as a head 51, a footboard 52, a seat cushion 53, wheels 54, a power and transmission mechanism 55 and a housing 56. The frame structure 1 of the present embodiment in Fig. 1 looks like a spoon with the handle tilting up backward from the side view. However, the size and angle of the appearance of the frame structure 1 can be changed according to the shape and inner means arrangement of various motorcycles used.

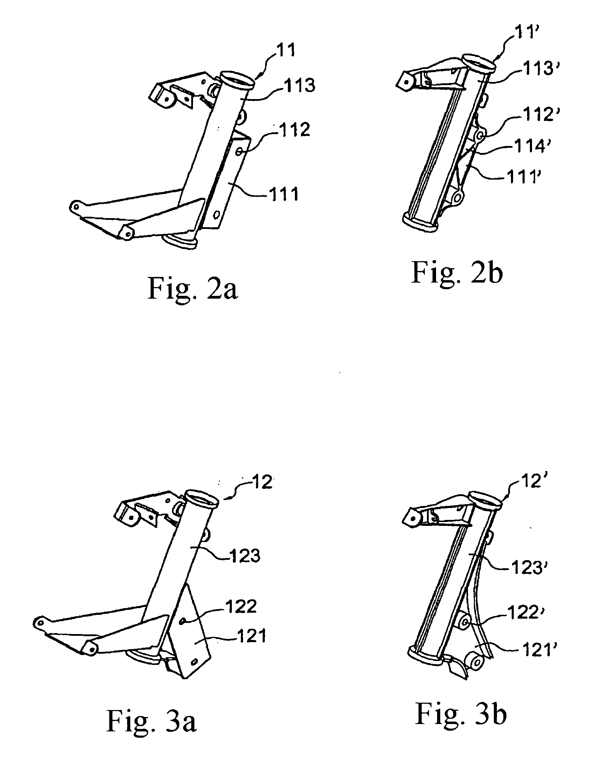

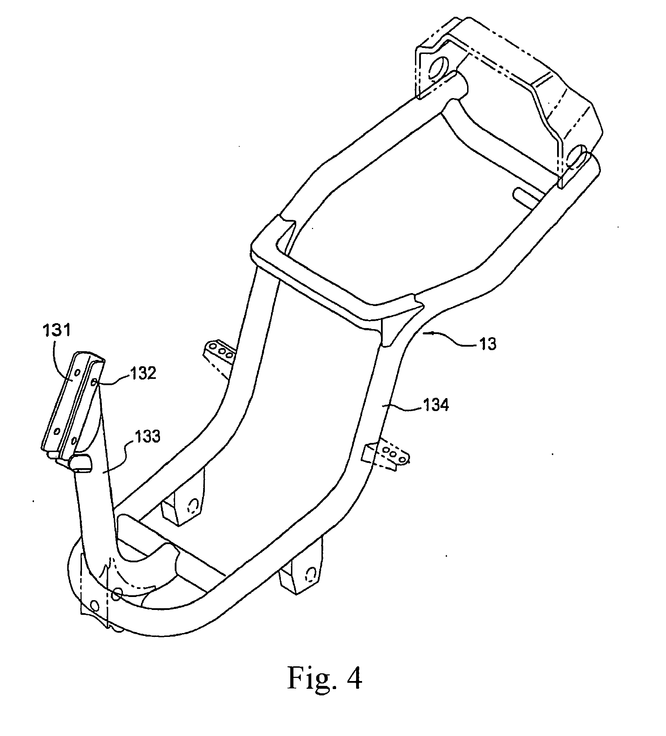

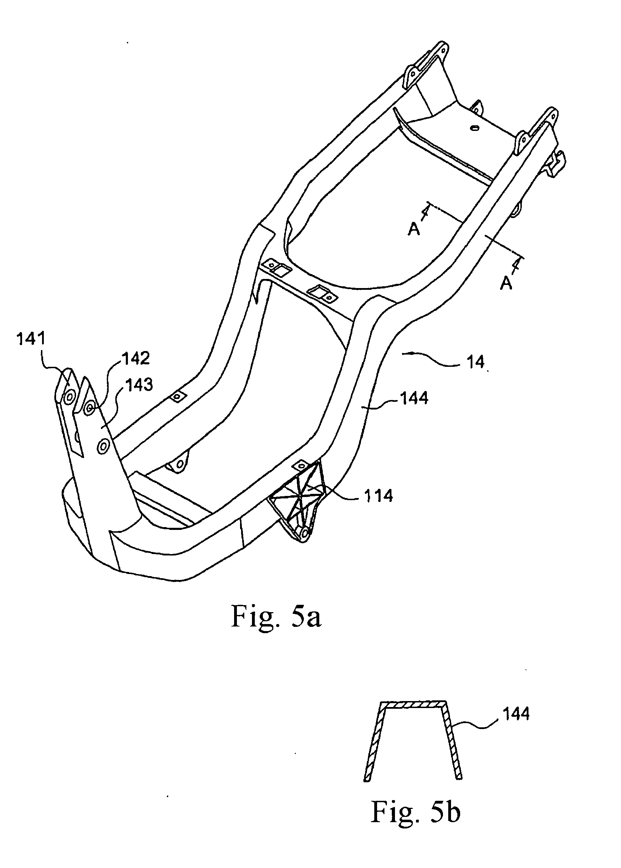

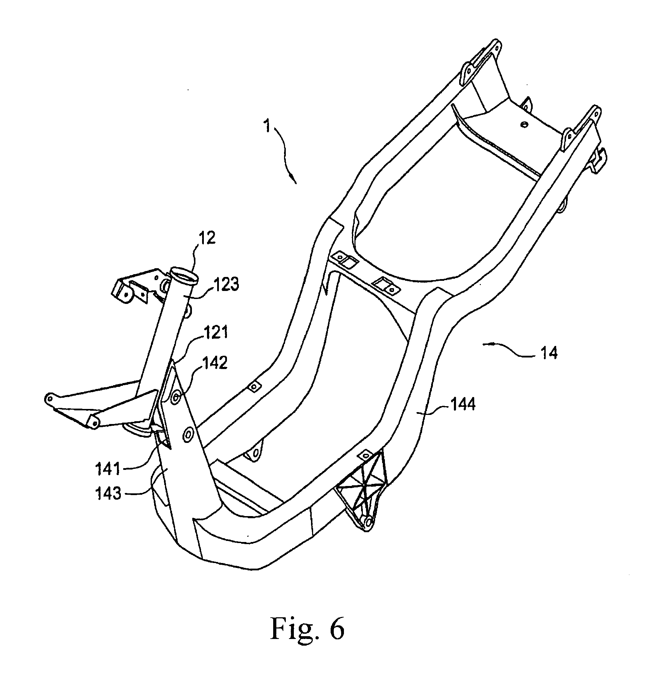

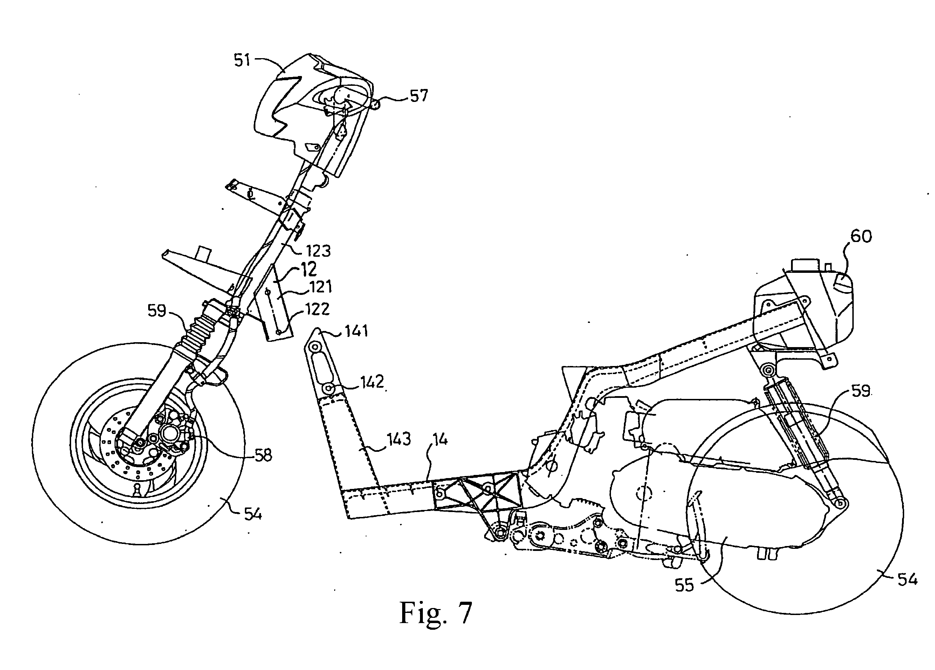

Next, referring to Figs. 2 to 7, Fig. 2(a) is a stereogram of a welding-type head tube frame 11 in the frame structure of the present embodiment, and Fig. 2(b) is a stereogram of an integrated casting-type head tube frame 11' in the frame structure of a motorcycle of the present embodiment. Fig. 3(a) is a stereogram of another welding-type head tube frame 12 in the frame structure of a motorcycle of the present embodiment, and Fig. 3(b) is a stereogram of another integrated casting-type head tube frame 12' in the frame structure of a motorcycle of the present embodiment. Fig. 4 is a stereogram of a welding-type main frame 13 in the frame structure of a motorcycle of the present embodiment. Fig. 5(a) is a stereogram of an integrated casting-type main frame 14 in the frame structure of a motorcycle of the present embodiment, and Fig. 5(b) is a sectional view along Line A-A. Fig. 6 is a schematic view of the joining state of an assembled frame structure of a motorcycle according to the present teaching with other means of the motorcycle omitted. Fig. 7 is a schematic view of the modularized assembly of the frame structure of a motorcycle according to the present teaching.

As shown in Figs. 2(a) and 2(b), Fig. 2(a) is a welding-type head tube frame 11 manufactured by welding steel tube and sheet metal, and Fig. 2(b) is an integrated casting type head tube frame 11' manufactured by integrated casting. The welding-type head tube frame 11 of Fig. 2(a) comprises a joint 111 for joining the aftermentioned welding-type main frame 13, a bolt hole 112 used for bolt joining and a head tube 113 for assembling other means of the motorcycle 50. Similarly, the integrated casting-type head tube frame 11' of Fig. 2(b) also comprises a joint 111' for joining the main frame 13, a bolt hole 112' used for bolt joining and a head tube 113' for assembling other means of the motorcycle 50.

Next, as shown in Figs. 3(a) and 3(b), Fig. 3(a) is a welding-type head tube frame 12 manufactured by welding steel tube and sheet metal, and Fig. 3(b) is an integrated casting-type head tube frame 12' manufactured by integrated casting. The welding-type head tube frame 12 of Fig. 3(a) comprises a joint 121 for joining the aftermentioned integrated casting type main frame 14, a bolt hole 122 used for bolt joining and a head tube 123 for assembling other means of the motorcycle 50. Similarly, the integrated casting-type head tube frame 12' of Fig. 3(b) also comprises a joint 121' for joining the integrated casting-type main frame 14, a bolt hole 122' used for bolt joining and a head tube 123' for assembling other means of the motorcycle 50.

Moreover, as shown in Fig. 2(b), a structure reinforcement board 114' is formed inside the integrated casting-type head tube frames 11, 11', so as to enhance the strength of the integrated casting-type frame.

Figs. 4 and 5(a) are both main frames in the frame structure of the present embodiments. Fig. 4 is a welding-type main frame 13 manufactured by welding steel tube and sheet metal, and Fig. 5(a) is an integrated casting-type main frame 14 manufactured by integrated casting. The welding-type main frame 13 of Fig. 4 comprises a supporting portion 131 located at the upper end of a down tube portion 133 for joining the welding-type head tube frame 11 or the integrated casting-type head tube frame 11', a bolt hole 132 used for bolt joining and a main frame body 134 extending up backward for assembling other means of the motorcycle 50. Similarly, the integrated casting-type main frame 14 of Fig. 5(a) comprises a supporting portion 141 located at the upper end of a down tube portion 143 for joining the welding-type head tube frame 12 or the integrated casting-type head tube frame 12', a bolt hole 142 used for bolt joining and a main frame body 144 extending up backward for assembling other means of the motorcycle 50.

In principle, the integrated casting-type main frame 14 is of a bilateral symmetrical shape. It is preferred that the main frame body 144 except for the down tube portion 143 has an open side facing downward (see Fig. 5b), so as to save the material, reduce the cost and meanwhile have a relatively high supporting strength. Moreover, a structure reinforcement board (not shown) can be formed inside the main frame body 144, for enhancing the strength of the main frame body 144.

If the main frame and the head tube frame are to be assembled according to the above configuration, the bolt hole 112 of the joint 111 of the welding-type head tube frame 11 or the bolt hole 112' of the joint 111' of the integrated casting-type head tube frame 11' is joined to the bolt hole 132 of the supporting portion 131 of the welding-type main frame 13 by a bolt. Or, the bolt hole 122 of the joint 121 of the welding-type head tube frame 12 or the bolt hole 122' of the joint 121' of the integrated casting-type head tube frame 12' is joined to the bolt hole 142 of the supporting portion 141 of the integrated casting-type main frame 14 by a bolt. As such, the frame 1 in a joining state shown in Fig. 6 is formed.

Furthermore, although bolt joining is taken as an example to illustrate the joining manner of the main frame and the head tube frame of the present embodiments, the present teaching is not limited to bolt combining. For example, the main frame and the head tube frame can also be caught with each other by forming a recessed portion or a projected portion (not shown) respectively at the corresponding positions of the joints 111, 111', 121, 121' of the head tube frame and the supporting portions 131, 141 of the main frame.

In the above configuration, if at least one frame is an integrated casting-type frame, as in the aforementioned one, or both are integrated casting-type frames, the plurality of tubes is not joined by welding, and comparatively, the required number of the prepared means and the cost and working hours of the welding process can be significantly reduced, and the previous problem of being low in strength at the welding portion can also be avoided. Therefore, technicians in the field can both consider the strength requirement of the design and the cost management control when designing a motorcycle and accordingly select any one of the above combinations to achieve the optimal function.

Moreover, according to the configuration of the present embodiments, the head tube frame and the main frame are detachable from each other and respectively sent to an individual product line at the same period to respectively go through a series of assembly operations, i.e., respectively going through the individual modularized assembly. Therefore, there is no need for the frames to wait to go through the individual assembly operations in sequence on one product line as in the conventional art, and thus the time required by the whole assembly operation flow can be greatly reduced.

In particular, the combination of the welding-type head tube frame 12 and the integrated casting-type main frame 14 is taken as an example for illustration. As shown in the schematic view of the modularized assembly of Fig. 7, during the manufacturing process of the motorcycle 50, as for the welding-type head tube frame 12 sent to a product line, the head tube 123 can be first assembled sequentially with the head 51 having operating portions such as a handle 57, and the wheels 54 having a brake system 58 and a shock absorber 59 and so on. Meanwhile, the integrated-type main frame 14 sent to another product line is also assembled sequentially with the wheels 54, power and transmission mechanism 55, shock absorber 59 and a storage case 60 and so on.

After the welding-type head tube frame 12 and the integrated casting-type main frame 14 are respectively assembled with other means, they are joined to the front and rear sections of the motorcycle via the joint 121 and the supporting portion 141 in the above mentioned manner. Afterward, operations such as making the guide assembly of the front and back wirings and the covering of the housing are carried out, thus finishing the manufacturing of the motorcycle 50. As such, according to the frame structure of a motorcycle of the present embodiments, the assembly of the integrated casting-type main frame 14 is detached from that of the welding-type head tube frame 12 and is carried out on an individual product line at the same period. Therefore, there is no need for the integrated casting-type main frame 14 to wait till the welding-type head tube frame 12 is assembled, and the modularized assembly thereof can be carried out simultaneously. As such, the time required by the whole assembly operation flow can be greatly reduced.

The material used to cast the integrated casting-type head tube frames 11', 12' and the integrated casting-type main frame 14 can be light metals such as aluminum, magnesium and titanium. The metal materials are not only light, thus achieving a lightweight motorcycle, but also characterized by being meltable and easily recycled by sorting in response to the rise of global environmental protection awareness. Therefore, when the frame is discarded and recycled, compared with the conventional welding steel tube frame, the frame is more easily melted and recycled by sorting, which may greatly enhance the recycling efficiency. Moreover, the casting material can also be plastic polymer, i.e., engineering plastics, which has advantages such as high strength, shock resistance, and heat endurance, for example, nylon. Or, composite materials with all the advantages of various materials and having high strength, rigidity, toughness, etc., such as fibre-reinforced plastic, can be used for casting the integrated casting-type head tube frames 11', 12' and the integrated casting-type main frame 14.

According to the above configuration of the present embodiments, the light metal, engineering plastics, or composite materials, etc., are used to cast the left front frame, right front frame, and rear frame, so the weight of the frame can be greatly reduced and the accelerating capability of the motorcycle can be enhanced, as compared with the conventional frame of a motorcycle.

Though the technical content and features of the present teaching have been disclosed above, technicians in the field can still make various modifications and variations based on the above teachings and disclosures.

The description above discloses, in particular an embodiment which is a frame structure of a motorcycle, having a frame for installing each means of the motorcycle, and characterized in that the frame is divided into a head tube frame and a main frame. The head tube frame comprises a head tube and a joint, and the joint is joined to a supporting portion of the main frame and supported by the same, thus forming the frame.

According to the above preferred configuration, the frame is divided into a head tube frame and a main frame, and the joint of the head tube frame is joined to a supporting portion of the main frame and supported by the same, thus forming the frame of the motorcycle. For a motorcycle with such a frame, the head tube frame and the main frame are detached from each other and respectively sent to an individual product line at the same period to go through a series of assembly operations, i.e., respectively going through the individual modularized assembly. Therefore, there is no need for the frames to wait to go through the individual assembly operations in sequence on one product line as in the conventional art, and thus the time required by the whole assembly operation flow can be greatly reduced.

According to a further preferred embodiment, the frame structure of a motorcycle is divided into the head tube frame and the main frame from the down tube of the frame.

According to the above configuration, the frame is divided into the head tube frame and the main frame from the down tube of the frame structure, such that the down tube can be used to form the joint of the head tube frame and the supporting portion of the main frame.

According to a further preferred embodiment, the head tube frame and the main frame are respectively a welding member of steel tube and sheet metal, or an integrated casting.

According to the above configuration, the head tube frame and the main frame of the present embodiment may be any combination of a welding member and an integrated casting, a welding member and a welding member, an integrated casting and a welding member, or an integrated casting and an integrated casting. As a plurality of parts is joined by integrated casting instead of by welding, the number of the prepared means and the cost and working hours of the welding process can be reduced, and the low strength of the welding portion can be avoided. Therefore, when a motorcycle is designed, the strength requirement and the cost management control of the motorcycle can be considered together, and any one of the above combinations is selected to achieve an optimal function.

According to a further preferred embodiment, the integrated casting is cast by any one of the light metal, engineering plastics and composite materials.

According to the above configuration, the light metal, engineering plastics or composite materials used as the material of the integrated casting is light but of high strength, thus being able to improve the control performance and safety of the motorcycle, and also easily melted and recycled by sorting, thus being able to significantly improve the recycling efficiency in response to the trend of environmental protection.

According to a further preferred embodiment, there is disclosed a motorcycle, which has the frame structure of a motorcycle as discussed in one of the above embodiments.

According to the above configuration, a motorcycle with the function of the frame structure of a motorcycle as discussed in one of the above embodiments can be obtained.

The description above further discloses, as a preferred first aspect, a frame structure of a motorcycle, having a frame for installing parts of a motorcycle, characterized in that the frame is divided into a head tube frame and a main frame with the head tube frame comprising a head tube and a joint, wherein the joint of the head tube frame is joined to a supporting portion of the main frame and supported by the same, thus forming the frame.

Further, according to a preferred second aspect, the frame is divided into the head tube frame and the main frame from a down tube of the frame.

Further, according to a preferred third aspect, the head tube frame and the main frame are respectively a welding member of steel tube and sheet metal or an integrated casting.

Further, according to a preferred fourth aspect, the integrated casting is cast by any one of light metals, engineering plastics and composite materials.

Further according to a preferred fifth aspect, there is provided a motorcycle characterized by having the frame structure of a motorcycle as claimed in one of the first to fourth preferred aspects.

The description further discloses, as a particularly preferred embodiment, a frame structure of a motorcycle, being detachable, such that the frame structure can satisfy the modularization of assembling the front and rear sections of the frame respectively, so as to improve the assembly efficiency. Therein, the frame structure of the motorcycle has a frame for installing each means of the motorcycle, which is characterized in that the frame is divided into a head tube frame and a main frame. The head tube frame further includes a head tube and a joint. The joint is joined to a supporting portion of the main frame and supported by the same, so as to form the frame.

## Claims

1. Straddle-type vehicle, in particular two-wheeled vehicle such as motorcycle, having a frame structure for installing means of the vehicle, said frame structure being divided into a head tube frame and a main frame, which are joined via a joint portion to form a frame assembly.

2. Straddle-type vehicle according to claim 1, wherein the head tube frame comprises a head tube and a joint member, and the main frame comprises a supporting portion, and wherein the joint member of the head tube frame is joined to the supporting portion of the main frame and is supported by same to form the frame assembly.

3. Straddle-type vehicle according to claim 1 or 2, wherein the joint portion is arranged in the area of the down tube of the frame assembly.

4. Straddle-type vehicle according to one of the claims 1 to 3, wherein the head tube frame and the main frame are respectively a welding member of steel tube and sheet metal or an integrated casting.

5. Straddle-type vehicle according to claim 4, wherein the integrated casting is cast by any one of light metals, engineering plastics and composite materials.

6. Assembly method for a straddle-type vehicle, in particular two-wheeled vehicle such as a motorcycle, said vehicle being provided with a frame assembly combined of a head tube frame and a main frame, wherein initially the assembly operations required to install means of the vehicle to the frame assembly are carried out for the head tube frame and the main frame independently from each other, and wherein, subsequently, the head tube frame and the main frame are joined together to form the frame assembly.
